# FASCICULE DE BREVET EUROPEEN

(11) **EP 3 976 475 B1**
(45) Date de publication et mention de la délivrance du brevet: **24.04.2024**
(21) Numéro de dépôt: 20737232.7
(22) Date de dépôt: 13.05.2020
(51) Int. Cl.: B64F 5/50

(54) **DISPOSITIF POUR LA FIXATION D'UN OUTILLAGE DE LEVAGE SUR PORTE D'INVERSEUR DE POUSSÉE DE NACELLE D'AÉRONEF**
VORRICHTUNG ZUR BEFESTIGUNG EINES HEBEWERKZEUGS AN EINER SCHUBUMKEHRKLAPPE EINER FLUGZEUGGONDEL
DEVICE FOR ATTACHING A LIFTING TOOL TO AN AIRCRAFT NACELLE THRUST REVERSER DOOR

(30) Priorité: 29.05.2019 FR 1905732
(43) Date de publication de la demande: 06.04.2022
(73) Titulaire: Safran Nacelles, 76700 Gonfreville l'Orcher (FR)
(72) Inventeur: DEHAIS, Tony, 77550 MOISSY CRAMAYEL (FR); LUCIENNE, Vivien, 77550 MOISSY CRAMAYEL (FR)
(74) Mandataire: Germain Maureau
(86) Numéro de dépôt international: PCT/FR2020/050796
(87) Numéro de publication internationale: WO 2020/240110

(56) Documents cités:
- KR-A- 20140 137 828
- US-A1- 2013 302 083

## Description

La présente invention concerne un dispositif pour la fixation d'un outillage de levage pour porte d'inverseur de poussée de nacelle d'aéronef et plus particulièrement une vis d'interface pour outillage de levage de porte d'inverseur de poussée. Un tel dispositif est divulgué dans US2013/302083 A1.

Bien que l'invention soit décrite au regard d'un outillage de levage d'une porte d'inverseur de poussée, elle ne se limite pas à cela. En effet, le dispositif de l'invention pourra être adapté à la fixation d'un outillage de levage sur tout autre élément tel que par exemple un moteur, voire même à la fixation de tout outillage de manutention ou de support sur un élément d'un aéronef. L'étendue de l'invention est définie dans les revendications.

Un aéronef est mû par au moins un ensemble propulsif comportant un turboréacteur logé dans une nacelle présentant généralement une structure tubulaire comprenant une entrée d'air en avant du turboréacteur, une section médiane destinée à entourer une soufflante du turboréacteur, une section arrière destinée à entourer la chambre de combustion du turboréacteur et pouvant abriter des moyens d'inversion de poussée ou inverseur de poussée.

Un inverseur de poussée comprend des éléments mobiles d'inversion de poussée, généralement deux éléments mobiles d'inversion de poussée, portés par la nacelle pour se déplacer entre une position de fermeture (jet direct) dans laquelle l'inverseur de poussée est inactif, et une position d'ouverture (jet inversé) dans laquelle l'inverseur de poussée est actif, c'est-à-dire qu'il renvoie au moins une partie du flux de gaz généré par le turboréacteur dans la direction inverse au flux guidé par la nacelle. Dans la position de jet inversé, l'inverseur de poussée renvoie au moins une partie du flux de gaz généré par le turboréacteur dans la direction inverse au flux guidé par la nacelle. Dans un type d'inversion de poussée, les éléments mobiles d'inversion sont des portes. Lors de l'assemblage des portes sur un inverseur de poussée, ou lors de leur désassemblage en vue de la maintenance, la manipulation des portes est réalisée grâce à un outillage permettant de supporter et manipuler les portes. On parle d'outillage de levage.

Un tel outillage présente généralement une armature métallique présentant au moins trois points de fixation à la porte, chaque point de fixation comportant une vis filetée, destinée à être vissée dans un orifice disposé sur la porte. De façon à pouvoir s'adapter à des portes présentant des formes et des tailles différentes, et donc des orifices à des emplacements différents, chaque vis filetée présente avantageusement un système d'orientation de la vis filetée, grâce à un système de rotules au niveau de la liaison entre la vis et l'outillage.

Lors de l'approche de l'outillage de la porte, l'extrémité filetée des vis, destinée à être introduite dans un orifice de la porte, risque d'endommager la porte lorsqu'elle rentre en contact avec celle-ci.

La présente invention a ainsi notamment pour but de permettre de protéger la porte de l'extrémité filetée des vis d'un outillage de levage.

A cet effet, l'invention a pour objet un dispositif pour la fixation d'un outillage de levage sur un élément d'aéronef tel qu'une porte d'inverseur de poussée de nacelle, le dispositif comportant :
- une vis filetée présentant un axe longitudinal et comportant une extrémité distale présentant une tête de vis, une extrémité proximale filetée et une partie intermédiaire,
- un corps creux dans lequel est logée la vis filetée tout en permettant la rotation de la vis filetée selon son axe longitudinal,
- un système d'orientation et de positionnement de la vis filetée permettant la rotation de la vis autour d'axes transversaux à l'axe longitudinal de la vis filetée, et la translation de la vis parallèlement à son axe longitudinal,
- un système de rétractation de l'extrémité filetée de la vis dans le corps.

Ainsi la vis filetée est rétractable dans le corps de sorte que sa partie filetée soit apte à être disposée à l'intérieur du corps lors de l'approche de l'outillage de levage de la porte, et en saillie du corps lorsque l'outillage est positionné sur la porte. La porte est donc protégée de la partie filetée de la vis lors de l'approche de l'outillage de la porte. Comme indiqué précédemment, bien que l'invention soit décrite au regard d'un outillage de levage d'une porte d'inverseur de poussée, elle ne se limite pas à cela. En effet, le dispositif de l'invention pourra être adapté à la fixation d'un outillage de levage sur tout autre élément tel que par exemple un moteur, voire même à la fixation de tout outillage de manutention ou de support sur un élément d'un aéronef.

Le dispositif selon l'invention permet donc à la fois de modifier l'orientation et le positionnement de la vis et de protéger la porte de la partie filetée de la vis lors de l'approche de l'outillage.

La modification de l'orientation et du positionnement de la vis permet d'adapter l'outillage de levage à des portes de différentes dimensions et de différentes formes, les positions des points d'interface étant différentes d'une porte à l'autre. L'extrémité proximale de la vis filetée est son extrémité destinée à être introduite dans un orifice de la porte.

Selon d'autres caractéristiques de l'invention, le dispositif de l'invention comporte l'une ou plusieurs des caractéristiques optionnelles suivantes considérées seules ou selon toutes les combinaisons possibles.

Selon une caractéristique, le système de rétractation comporte un ressort et une entretoise, le ressort étant disposé entre le corps creux et la tête de vis, le ressort prenant appui par son extrémité proximale sur le corps creux et par son extrémité distale sur la tête de vis via l'entretoise, l'entretoise présentant une forme permettant de faire la liaison entre la tête de vis et le système d'orientation et de positionnement de la vis, lorsque la vis est en saillie dans un orifice de la porte.

Le ressort permet de repousser l'entretoise et donc la tête de vis, de sorte que l'extrémité filetée de la vis soit disposée à l'intérieur du corps. Lorsque le dispositif selon l'invention est positionné au contact d'un orifice de la porte dans lequel il est destiné à être introduit, le ressort est apte à être comprimé par application d'une force de rotation autour de l'axe longitudinal de la vis, manuellement ou à l'aide d'une clef de fixation, sur la tête de vis, permettant l'introduction de l'extrémité filetée dans l'orifice. Selon une caractéristique, le système d'orientation et de positionnement de la vis fileté comporte :
- un élément tubulaire comportant une extrémité proximale avec un perçage transversal oblong dans lequel est insérée la vis filetée et une extrémité distale destinée à être fixée à l'outillage de levage, et
- un système de rotules disposé au contact du corps creux et des parois externes du perçage transversal oblong de l'élément tubulaire.

Selon une caractéristique, le diamètre extérieur du corps creux est inférieur au diamètre du perçage transversal oblong, de sorte qu'un jeu soit présent entre la paroi interne du perçage transversal oblong et le corps creux inséré dans le perçage transversal oblong.

Ainsi, le positionnement de la vis est ajustable. La vis est apte à réaliser une translation dans toute direction perpendiculaire à son axe longitudinal, jusqu'à ce que le corps creux soit en contact avec la paroi interne du perçage.

Selon une caractéristique, le système de rotules comprend au moins un couple de rondelles convexe et concave.

Le système de rotules est disposé au contact des parois externes du perçage transversal oblong de l'élément tubulaire et du corps creux de sorte que la vis puisse pivoter sur elle-même et autour de tout axe transversal à son axe longitudinal.

Selon une caractéristique, le système de rotules comprend un couple proximal de rondelles convexe et concave, et un couple distal de rondelles convexe et concave, chaque couple étant disposé au contact des parois externes du perçage transversal oblong de l'élément tubulaire et du corps creux, de chaque côté du perçage transversal oblong de l'élément tubulaire.

Ainsi, la position et l'orientation du dispositif selon l'invention sont bloquées lors du serrage de la vis dans la porte.

Selon une caractéristique, le corps creux est en matériau métallique tel que des alliages de fer ou d'aluminium, de l'acier inoxydable ou de la fonte.

Selon une caractéristique, le dispositif selon l'invention comporte en outre une pièce de protection creuse, disposée à l'extrémité proximale dudit corps par rapport à l'extrémité filetée de la vis, et destinée à protéger l'interface entre la porte et ledit corps.

La pièce de protection est en matériau plus mou que le corps, tel que le PTFE (Polytétrafluoroéthylène).

La pièce de protection est fixée à l'extrémité proximale du corps par complémentarité de forme.

L'invention concerne en outre un outillage de levage pour un élément d'aéronef, tel qu'une porte d'inverseur de poussée de nacelle, comportant un dispositif selon l'invention tel que décrit précédemment.

Selon une caractéristique, l'outillage comporte une armature comprenant au moins trois branches tubulaires creuses, chaque branche comprenant une première extrémité et une deuxième extrémité opposée à la première extrémité, les branches étant reliées entre elles par leur première extrémité, et un dispositif tel que décrit précédemment étant logé dans la deuxième extrémité de chaque branche.

Plus particulièrement, un dispositif tel que décrit précédemment est logé dans la deuxième extrémité de chaque branche par son extrémité distale.

D'autres caractéristiques et avantages de la présente invention apparaîtront à la lecture de la description qui va suivre et à l'examen des figures annexées dans lesquelles :
[Fig. 1] est une vue schématique en perspective d'un dispositif pour la fixation d'un outillage de levage selon l'invention, le dispositif comportant une vis en position en saillie ;
[Fig. 2] est une vue schématique en coupe du dispositif de la figure 1 vu de côté, la vis étant en position rétractée ;
[Fig. 3] est une vue schématique en coupe du dispositif de la figure 2, la vis étant en position en saillie et introduite dans une porte partiellement représentée ;
[Fig. 4] est une vue schématique en perspective d'un outillage de levage d'une porte fixé sur une porte grâce à des dispositifs selon l'invention ;
[Fig. 5] est une vue schématique en coupe du dispositif de la figure 1 vu de côté, illustrant une première variante de positionnement de la vis par translation parallèle à son axe longitudinal ;
[Fig. 6] est une vue schématique en coupe du dispositif de la figure 1 vu de côté, illustrant une deuxième variante de positionnement de la vis par translation parallèle à son axe longitudinal ;
[Fig. 7] est une vue schématique en coupe du dispositif de la figure 1 vu de dessus.

Dans la description qui va suivre et dans les revendications, des composants identiques, similaires ou analogues seront désignés par les mêmes chiffres de référence et on emploiera les termes « avant », « arrière », « horizontal », « vertical », « supérieur », « inférieur », etc. à titre non limitatif et en référence aux dessins afin de faciliter la description.

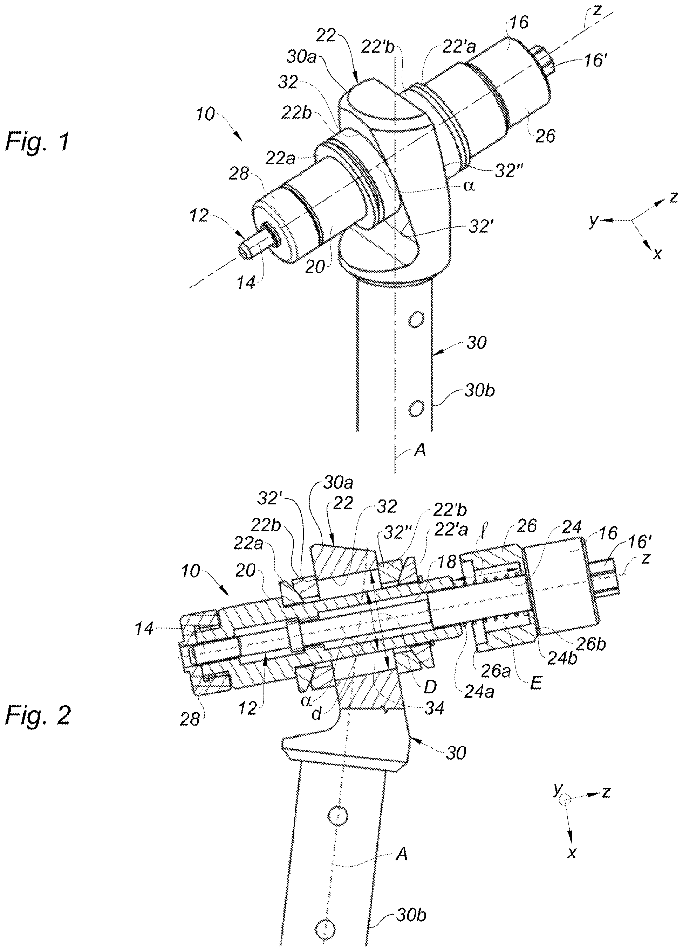

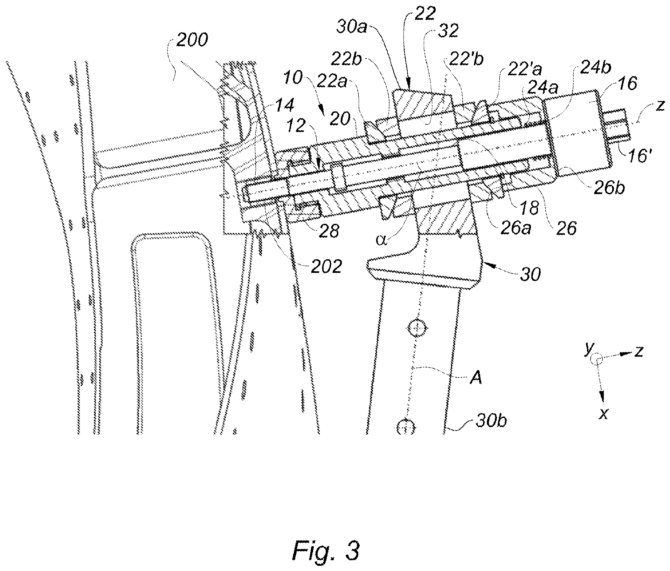

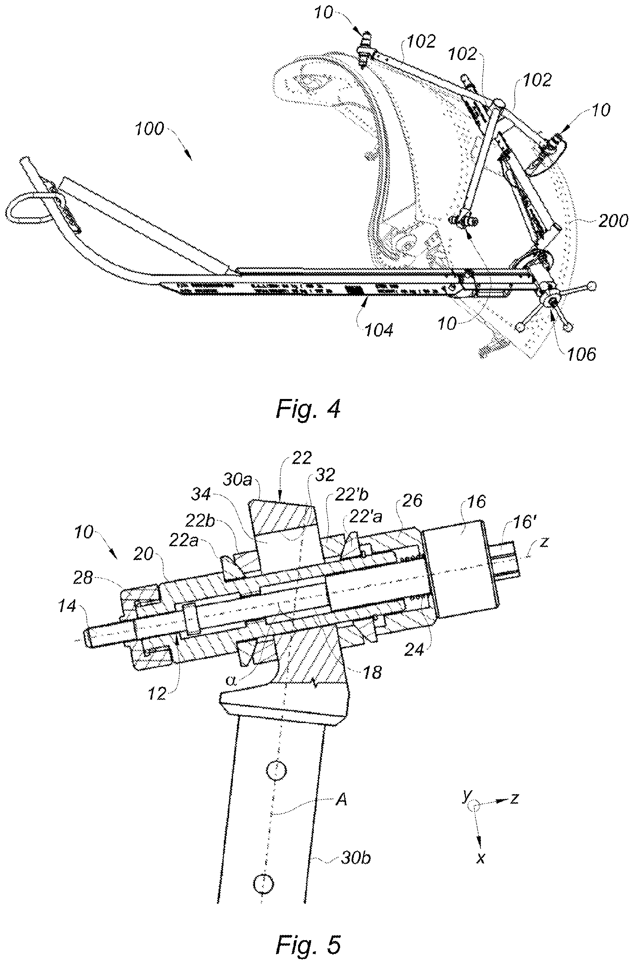

La figure 1 représente un dispositif 10 pour la fixation d'un outillage de levage 100 (figure 4) sur un élément tel qu'une porte 200 d'inverseur de poussée (figure 3). Le dispositif 10 comporte une vis 12 filetée présentant un axe longitudinal « z ». La vis 12 est logée dans un corps 20 creux métallique. La vis 12 et le corps 20 sont d'axe longitudinal « z ».

Le dispositif 10 comporte en outre un système 22 d'orientation et de positionnement de la vis 12 permettant la rotation de la vis 12 autour de tout axe transversal à l'axe longitudinal « z » de la vis 12, et la translation de la vis 12 dans toute direction perpendiculaire à son axe longitudinal « z ».

Le système 22 d'orientation et de positionnement de la vis comporte un élément tubulaire 30 présentant un axe d'extension A et comportant une extrémité proximale 30a avec un perçage 32 transversal oblong dans lequel est insérée la vis 12, et une extrémité distale 30b destinée à être fixée à l'outillage 100 de levage (figure 4). La vis 12 est insérée dans le perçage 32 transversal oblong, de sorte que l'axe longitudinal « z » de la vis 12 et l'axe d'extension A de l'élément tubulaire 30 forment un angle α de l'ordre de 25°, l'angle α étant apte à être ajustable entre 10 et 40° et notamment entre 20 et 30°.

On comprendra que l'angle α peut prendre toute valeur entre 10 et 40°. A titre d'exemple, l'angle α est de 15°. En variante, l'angle α est de 30°.

Le système 22 d'orientation et de positionnement de la vis comporte en outre un couple proximal de rondelles convexe 22a et concave 22b, et un couple distal de rondelles convexe 22'a et concave 22'b, chaque couple étant disposé au contact du corps 20 creux et des parois externes 32', 32" du perçage 32 transversal oblong de l'élément tubulaire 30, de chaque côté dudit perçage 32.

Dans la suite de la description, le dispositif de l'invention sera décrit au regard d'un dispositif pour la fixation d'un outillage de levage d'une porte d'inverseur de poussée, bien qu'il puisse être adapté pour la fixation d'un outillage de levage de tout autre élément.

La vis 12 filetée présente une extrémité proximale 14 filetée destinée à être introduite dans un orifice 202 d'une porte d'inverseur de poussée (figure 3), une extrémité distale 16 présentant la forme d'une tête de vis, et une partie intermédiaire 18 (figure 2), non visible sur la figure 1.

La tête de vis 16 est moletée de façon à permettre un serrage manuel. Elle comporte également une protubérance 16' dans la direction longitudinale de la vis, permettant un serrage mécanique à l'aide d'un outil.

Dans la configuration de la figure 1, l'extrémité filetée 14 de la vis 12 est en saillie du corps 20 creux de sorte à permettre son introduction dans un orifice 202 (figure 3). La tête de vis 16 est également en saillie du corps 20 creux de sorte à permettre la préhension de la tête de vis 16 par un utilisateur pour le réglage de la position et de l'orientation de la vis, et pour sa mise en rotation autour de son axe longitudinal « z » afin de l'introduire dans (vissage) ou la retirer d'un (dévissage) orifice d'une porte d'inverseur de poussée, comme illustré à la figure 3. Le réglage de la position et de l'orientation de la vis seront décrits par la suite au regard de la figure 2.

La vis 12 est insérée dans le perçage 32 transversal oblong, de sorte qu'une portion de sa partie intermédiaire 18 (figure 2) soit disposée dans le perçage 32 transversal oblong. La longueur de la portion de la partie intermédiaire 18 (figure 2) disposée dans le perçage 32 transversal oblong est de l'ordre du tiers de la longueur totale de ladite partie intermédiaire.

Le couple proximal de rondelles convexe 22a et concave 22b est disposé à proximité de l'extrémité filetée 14 de la vis 12, et le couple distal de rondelles convexe 22'a et concave 22'b est disposé à proximité de la tête de vis 16. Les rondelles concaves 22b, 22'b de chaque couple sont disposées au contact des parois externes 32', 32" du perçage 32 et les rondelles convexes 22a, 22'a de chaque couple sont disposées au contact du corps 20 creux (figure 2). Plus particulièrement, les rondelles convexes 22a, 22'a de chaque couple sont maintenues par un élément permettant un clipsage desdites rondelles, nommé circlip, le circlip étant inséré dans une encoche ménagée dans le corps 20 creux.

De plus, le dispositif 10 comporte un système de rétractation de l'extrémité proximale 14 filetée de la vis 12 dans le corps 20 creux. Ce système de rétractation comporte un ressort 24 (figure 2) et une entretoise 26. Il sera décrit par la suite au regard de la figure 2.

Enfin, une pièce de protection 28 creuse est disposée à l'extrémité proximale du corps 20 creux, afin de protéger l'interface entre la porte 200 (figure 3) et le dispositif 10 du corps 20 creux qui est métallique. La pièce de protection 28 est en PTFE (Polytétrafluoroéthylène). Elle est fixée à l'extrémité proximale du corps par complémentarité de forme, comme illustré à la figure 2.

La figure 2 illustre le dispositif 10 de la figure 1, en coupe, la vis 12 étant en position rétractée dans le corps 20 creux.

L'extrémité filetée 14 et la partie intermédiaire 18 de la vis 12 sont logées en partie dans le corps 20 creux. Le diamètre extérieur de la partie intermédiaire 18 et de l'extrémité filetée 14 de la vis 12 est sensiblement inférieur au diamètre intérieur du corps 20 creux. De sorte à permettre la rotation de la vis 12 filetée autour son axe longitudinal « z ». En revanche, le diamètre extérieur de la tête de vis 16 est supérieur au diamètre intérieur du corps 20 creux, de sorte que la tête de vis 16 soit accessible par l'utilisateur de façon à permettre la préhension de la vis 12 et sa mise en rotation manuelle, et de sorte à offrir un appui plan au ressort 24 et à l'entretoise 26.

La pièce de protection 28 est fixée à l'extrémité proximale du corps 20 creux par complémentarité de forme de sorte à envelopper la partie de l'extrémité filetée 14 non logée dans le corps 20 creux. Ainsi la vis 12 est en position rétractée dans le corps 20 creux et la pièce de protection 28.

Le ressort 24 du système de rétractation est disposé entre le corps 20 creux et la tête de vis 16, de sorte que la partie intermédiaire 18 de la vis 12 soit disposée dans le ressort 24 au niveau de son extrémité proximale à la tête de vis 16. Le ressort 24 comporte une extrémité proximale 24a prenant appui sur le corps 20 creux, et une extrémité distale 24b prenant appui sur la tête de vis 16 via l'entretoise 26.

Dans cette position rétractée, le ressort 24 est dans une position allongée, proche de sa position détendue. On est dans la phase d'approche de l'outillage. Il repousse la tête de vis 16 dans la direction opposée au corps 20 creux, via l'entretoise 26, de sorte que la tête de vis 16 soit espacée du corps 20 creux d'un espace E et que l'extrémité filetée 14 de la vis 12 soit rétractée dans le corps 20 creux et la pièce de protection 28. L'espace E présente une longueur « l » légèrement inférieure à la longueur du ressort 24 dans sa position de repos (détendue), de l'ordre de 27 mm.

Comme il sera vu au regard de la figure 3, lorsque le dispositif 10 est positionné au contact d'un orifice 202 dans lequel il est destiné à être introduit, le ressort 24 est apte à être comprimé par application d'une force, manuellement ou à l'aide d'une clef de fixation, sur la tête de vis 16, permettant l'introduction de l'extrémité filetée 14 dans l'orifice 202, c'est-à-dire le vissage.

L'entretoise 26 est disposée entre la tête de vis 16 et le corps 20 creux. Elle présente une extrémité proximale 26a libre, et une extrémité distale 26b solidaire de la tête de vis 16. Comme il sera vu au regard de la figure 3, l'entretoise 26 présente une forme permettant de faire la liaison entre la tête de vis 16 et le système 22 d'orientation et de positionnement de la vis, et plus précisément avec le couple distal de rondelles convexe 22'a et concave 22'b, et donc de bloquer tout mouvement de la vis 12 lorsque celle-ci est en saillie dans un orifice de porte.

Dans une variante non représentée, ce sont les rondelles convexes 22a, 22'a de chaque couple de rondelles convexe et concave qui sont au contact des parois externes 32', 32" du perçage 32.

Dans une autre variante non représentée, le couple distal de rondelles convexe 22'a et concave 22'b comporte la rondelle concave 22'b au contact des parois externes 32', 32" du perçage 32tandis que le couple proximal de rondelles convexe 22a et concave 22b comporte la rondelle convexe 22a au contact des parois externes 32', 32" du perçage 32.

Dans une autre variante encore, le couple distal de rondelles convexe 22'a et concave 22'b comporte la rondelle convexe 22'a au contact des parois externes 32', 32" du perçage 32tandis que le couple proximal de rondelles convexe 22a et concave 22b comporte la rondelle concave 22b au contact des parois externes 32', 32" du perçage 32.

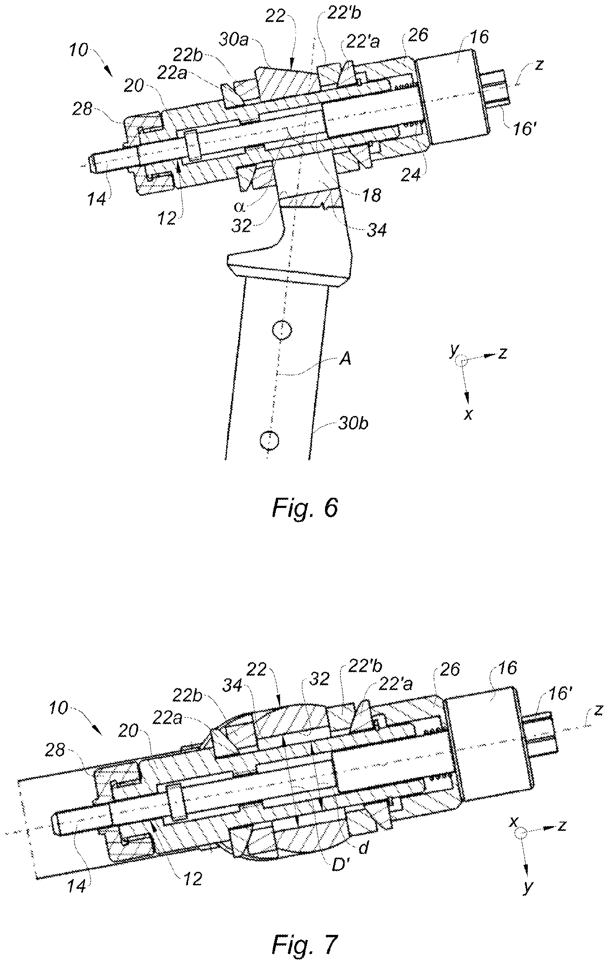

La figure 2 montre en outre qu'un jeu 34 est présent dans le perçage 32 transversal oblong, entre la paroi interne du perçage 32 et le corps 20 creux. Le diamètre « d » externe du corps 20 creux disposé dans le perçage 32 transversal oblong est de l'ordre de 24 mm, tandis que le diamètre D du perçage 32 transversal oblong dans sa plus grande dimension est de l'ordre de 40 mm. Dans la configuration de la figure 2, le corps 20 creux est disposé au centre du perçage 32. Dans le plan du dispositif 10, c'est-à-dire dans la plus grande dimension du perçage 32, les dimensions du jeu 34 sont donc de l'ordre de 8 mm de chaque côté du corps 20 creux. Ce jeu permet d'ajuster le positionnement de la vis 12 par translation selon l'axe « x » transversal à l'axe longitudinal « z » de la vis, dans le plan du dispositif 10, comme il sera vu par la suite au regard des figures 5 et 6.

En outre, comme il sera vu par la suite au regard de la figure 7, le jeu 34 permet également d'ajuster le positionnement de la vis 12 par translation selon l'axe « y » transversal à l'axe longitudinal « z » de la vis, dans un plan transversal au plan du dispositif 10.

L'extrémité proximale 26a libre de l'entretoise 26 permet d'autoriser la mobilité de la vis 12 pour permettre son positionnement par translation dans toute direction perpendiculaire à son axe longitudinal « z », dans le perçage 32 transversal oblong, son orientation par variation de l'angle α entre l'axe longitudinal « z » de la vis 12 et l'axe d'extension A de l'élément 30 tubulaire, et sa rotation selon son axe longitudinal « z ». En effet, l'entretoise 26 n'étant pas bloquée en appui contre le couple distal de rondelles convexe 22'a et concave 22'b, l'utilisateur est apte à modifier la position et l'orientation de la vis 12.

La modification de la position et de l'orientation de la vis 12 permet d'adapter l'outillage 100 de levage (figure 4) à des portes de différentes dimensions et de différentes formes, les positions des orifices 202 étant différentes d'une porte à une autre.

Dans une variante non représentée, le dispositif 10 pour la fixation d'un outillage 100 de levage ne comporte pas de pièce de protection 28. Dans cette variante, l'extrémité filetée 14 de la vis 12 est entièrement logée dans le corps 20 creux lorsque la vis 12 est en position rétractée.

La figure 3 illustre le dispositif 10 de la figure 2, la vis 12 étant positionnée en saillie dans un orifice 202 de porte 200 d'inverseur de poussée.

Le ressort 24 est représenté en position comprimé à la figure 3, l'extrémité proximale 14 filetée de la vis 12 étant en saillie du corps 20 creux et disposée dans l'orifice 202 de porte 200. Dans cette position comprimée, l'espace E présente une longueur « l » correspondant à la longueur du ressort comprimé, de l'ordre de 9 mm.

Dans cette configuration, la mobilité de la vis 12 est figée par la tension induite par la tête de vis 16 en appui sur l'entretoise 26, elle-même en appui sur le couple distal de rondelles convexe 22'a et concave 22'b.

La figure 4 illustre un outillage 100 de levage d'une porte 200 fixé sur une porte 200 grâce à des dispositifs 10 selon l'invention.

L'outillage 100 comporte une armature comportant trois branches 102 reliées entre elles par une extrémité et comportant chacune un dispositif 10 tel que décrit précédemment à leur extrémité opposée, ainsi qu'un système de levage 104 permettant à la porte 200 d'effectuer des mouvements horizontaux et verticaux par l'intermédiaire d'un palan (non représenté) et une manivelle 106 permettant à la porte 200 d'effectuer des mouvements de rotation.

La figure 5 illustre le dispositif 10 de la figure 1, en coupe, la vis 12 étant positionnée au plus proche de la paroi interne du perçage 32, à proximité de l'extrémité distale 30b de l'élément tubulaire 30. Dans cette configuration, le corps 20 creux est disposé au contact de la paroi interne du perçage, à proximité de l'extrémité distale 30b de l'élément tubulaire 30. Dans le plan du dispositif 10, c'est-à-dire dans la plus grande dimension du perçage 32, les dimensions du jeu 34 sont donc de l'ordre de 16 mm entre le corps 20 creux et la paroi interne du perçage 32 à proximité de l'extrémité proximale 30a de l'élément tubulaire 30.

En variante, la figure 6 illustre le dispositif 10 de la figure 1, en coupe, la vis 12 étant positionnée au plus proche de la paroi interne du perçage 32, à proximité de l'extrémité proximale 30a de l'élément tubulaire 30. Dans cette configuration, le corps 20 creux est disposé au contact de la paroi interne du perçage, à proximité de l'extrémité proximale 30a de l'élément tubulaire 30. Dans le plan du dispositif 10, c'est-à-dire dans la plus grande dimension du perçage 32, les dimensions du jeu 34 sont donc de l'ordre de 16 mm entre le corps 20 creux et la paroi interne du perçage 32 à proximité de l'extrémité distale 30b de l'élément tubulaire 30.

La figure 7 illustre le dispositif 10 de la figure 1, en coupe selon le plan transversal au plan du dispositif 10, vu de dessus. Cette figure montre que le diamètre D' du perçage 32 transversal oblong dans sa plus petite dimension est de l'ordre de 32 mm. Le diamètre « d » externe du corps 20 creux est de l'ordre de 24 mm. Dans la configuration de la figure 7, le corps 20 creux est disposé au centre du perçage 32. Dans le plan transversal au plan du dispositif 10, c'est-à-dire dans la plus petite dimension du perçage 32, les dimensions du jeu 34 sont donc de l'ordre de 8 mm de chaque côté du corps 20 creux. Comme indiqué précédemment, ce jeu permet d'ajuster le positionnement de la vis 12 par translation selon tout axe transversal à l'axe longitudinal « z » de la vis. Plus particulièrement, comme représenté sur la figure 7, ce jeu permet d'ajuster le positionnement de la vis 12 par translation selon l'axe « y » transversal à l'axe longitudinal « z » de la vis, dans un plan perpendiculaire au plan du dispositif 10. Cet ajustement est similaire à l'ajustement décrit au regard des figures 5 et 6.

## Revendications

1. Dispositif (10) pour la fixation d'un outillage (100) de levage sur un élément d'aéronef tel qu'une porte (200) d'inverseur de poussée de nacelle, le dispositif comportant :
- une vis (12) filetée présentant un axe longitudinal (z) et comportant une extrémité distale (16) présentant une tête de vis, une extrémité proximale (14) filetée et une partie intermédiaire (18),
- un corps (20) creux dans lequel est logée la vis filetée tout en permettant la rotation de la vis filetée selon son axe longitudinal,
- un système d'orientation et de positionnement (22) de la vis filetée permettant la rotation de la vis autour d'axes transversaux (x, y) à l'axe longitudinal de la vis filetée, et la translation de la vis parallèlement à son axe longitudinal, le dispositif étant **caractérisé par**
- un système de rétractation (24, 26) de l'extrémité filetée de la vis dans le corps.

2. Dispositif selon la revendication 1, dans lequel le système de rétractation (24, 26) comporte un ressort (24) et une entretoise (26), le ressort (24) étant disposé entre le corps (20) creux et la tête de vis (16), le ressort prenant appui par son extrémité proximale (24a) sur le corps (20) creux et par son extrémité distale (24b) sur la tête de vis (16) via l'entretoise (26), l'entretoise présentant une forme permettant de faire la liaison entre la tête de vis (16) et le système d'orientation et de positionnement (22) de la vis, lorsque la vis (12) est en saillie dans un orifice de la porte (200).

3. Dispositif selon l'une quelconque des revendications précédentes, dans lequel le système d'orientation et de positionnement (22) de la vis filetée comporte :
- un élément tubulaire (30) comportant une extrémité proximale (30a) avec un perçage transversal oblong (32) dans lequel est insérée la vis (12) filetée et une extrémité distale (30b) destinée à être fixée à l'outillage (100) de levage, et
- un système de rotules disposé au contact du corps (20) creux et des parois externes (32', 32") du perçage (32) transversal oblong de l'élément tubulaire (30).

4. Dispositif selon la revendication précédente, dans lequel le diamètre (d) extérieur du corps (20) creux est inférieur au diamètre (D, D') du perçage (32) transversal oblong, de sorte qu'un jeu (34) soit présent entre la paroi interne du perçage (32) transversal oblong et le corps (20) creux inséré dans le perçage transversal oblong.

5. Dispositif selon l'une quelconque des revendications 3 à 4, dans lequel le système de rotules comprend au moins un couple de rondelles convexe (22a, 22'a) et concave (22b, 22'b).

6. Dispositif selon la revendication précédente, dans lequel le système de rotules est disposé au contact des parois externes (32', 32") du perçage (32) transversal oblong de l'élément tubulaire (30) et du corps (20) creux, de sorte que la vis (12) puisse pivoter sur elle-même et autour de tout axe transversal à son axe longitudinal (z).

7. Dispositif selon l'une quelconque des revendications 3 à 6, dans lequel le système de rotules comprend un couple proximal de rondelles convexe (22a) et concave (22b), et un couple distal de rondelles convexe (22'a) et concave (22'b), chaque couple étant disposé au contact des parois externes (32', 32") du perçage (32) transversal oblong de l'élément tubulaire (30) et du corps (20) creux, de chaque côté du perçage (32) transversal oblong de l'élément tubulaire.

8. Dispositif selon l'une quelconque des revendications précédentes, dans lequel le corps (20) creux est en matériau métallique tel que des alliages de fer ou d'aluminium, de l'acier inoxydable ou de la fonte.

9. Dispositif selon l'une quelconque des revendications précédentes, comportant une pièce de protection (28) creuse, disposée à l'extrémité proximale dudit corps (20) par rapport à l'extrémité filetée (14) de la vis (12), et destinée à protéger l'interface entre la porte (200) et ledit corps (20).

10. Dispositif selon la revendication précédente, dans lequel la pièce de protection est en matériau plus mou que le corps (20) creux, tel que le PTFE (Polytétrafluoroéthylène).

11. Outillage (100) de levage pour un élément d'aéronef, tel qu'une porte (200) d'inverseurde poussée de nacelle, comportant un dispositif(10) selon l'une quelconque des revendications précédentes.

12. Outillage selon la revendication précédente, comportant une armature comprenant au moins trois branches (102) tubulaires creuses, chaque branche (102) comprenant une première extrémité et une deuxième extrémité opposée à la première extrémité, les branches (102) étant reliées entre elles par leur première extrémité, et un dispositif (10) selon l'une quelconque des revendications 1 à 10 étant logé dans la deuxième extrémité de chaque branche (102).

## Patentansprüche

1. Vorrichtung (10) zum Befestigen eines Hebewerkzeugs (100) an einem Flugzeugelement wie einer Klappe (200) einer Schubumkehrvorrichtung einer Gondel, wobei die Vorrichtung Folgendes umfasst:
- eine Gewindeschraube (12), die eine Längsachse (z) aufweist und ein distales Ende (16) mit einem Schraubenkopf, ein proximales Gewindeende (14) und einen Zwischenteil (18) umfasst;
- einen Hohlkörper (20), der die Gewindeschraube aufnimmt und gleichzeitig die Drehung der Gewindeschraube entlang ihrer Längsachse ermöglicht;
- ein Ausrichtungs- und Positionierungssystem (22) für die Gewindeschraube, das die Drehung der Gewindeschraube um Achsen (x, y), die quer zur Längsachse der Gewindeschraube verlaufen, und die Translation der Gewindeschraube parallel zu ihrer Längsachse ermöglicht, wobei die Vorrichtung **gekennzeichnet ist durch**
- ein Rückzugssystem (24, 26) für das Gewindeende der Schraube in den Körper.

2. Vorrichtung nach Anspruch 1, wobei das Rückzugssystem (24, 26) eine Feder (24) und einen Abstandshalter (26) umfasst, wobei die Feder (24) zwischen dem Hohlkörper (20) und dem Schraubenkopf (16) angeordnet ist, wobei die Feder mit ihrem proximalen Ende (24a) auf dem Hohlkörper (20) und mit ihrem distalen Ende (24b) auf dem Schraubenkopf (16) über den Abstandshalter (26) zum Aufliegen kommt, wobei der Abstandshalter eine Form hat, die die Verbindung zwischen dem Schraubenkopf (16) und dem Ausrichtungs- und Positionierungssystem (22) der Schraube ermöglicht, wenn die Schraube (12) in eine Öffnung der Klappe (200) hineinragt.

3. Vorrichtung nach einem der vorhergehenden Ansprüche, wobei das Ausrichtungs- und Positionierungssystem (22) der Gewindeschraube Folgendes umfasst:
- ein rohrförmiges Element (30), das ein proximales Ende (30a) mit einer länglichen Querbohrung (32), in das die Gewindeschraube (12) eingeführt wird, und ein distales Ende (30b) umfasst, das am Hebewerkzeug (100) befestigt werden soll, und
- ein Kugelgelenksystem, das in Kontakt mit dem Hohlkörper (20) und den Außenwänden (32', 32") der länglichen Querbohrung (32) des rohrförmigen Elements (30) angeordnet ist.

4. Vorrichtung nach dem vorhergehenden Anspruch, wobei der Außendurchmesser (d) des Hohlkörpers (20) kleiner ist als der Durchmesser (D, D') der länglichen Querbohrung (32), so dass zwischen der Innenwand der länglichen Querbohrung (32) und dem in die längliche Querbohrung eingeführten Hohlkörper (20) ein Spiel (34) vorhanden ist.

5. Vorrichtung nach einem der Ansprüche 3 bis 4, wobei das Kugelgelenksystem mindestens ein Paar konvexe (22a, 22'a) und konkave (22b, 22'b) Unterlegscheiben enthält.

6. Vorrichtung nach dem vorhergehenden Anspruch, wobei das Kugelgelenksystem in Kontakt mit den Außenwänden (32', 32") der länglichen Querbohrung (32) des rohrförmigen Elements (30) und des Hohlkörpers (20) angeordnet ist, so dass die Schraube (12) um sich selbst und um jede Achse, die quer ihrer Längsachse (z) verläuft, schwenken kann

7. Vorrichtung nach einem der Ansprüche 3 bis 6, wobei das Kugelgelenksystem ein proximales Paar konvexe (22a) und konkave (22b) Unterlegscheiben und ein distales Paar konvexe (22'a) und konkave (22'b) Unterlegscheiben enthält, wobei jedes Paar in Kontakt mit den Außenwänden (32', 32") der länglichen Querbohrung (32) des rohrförmigen Elements (30) und des Hohlkörpers (20) auf jeder Seite der länglichen Querbohrung (32) entlang des rohrförmigen Elements angeordnet ist.

8. Vorrichtung nach einem der vorhergehenden Ansprüche, wobei der Hohlkörper (20) aus einem metallischen Material wie Eisen- oder Aluminiumlegierungen, rostfreiem Stahl oder Gusseisen besteht.

9. Vorrichtung nach einem der vorhergehenden Ansprüche, die ein hohles Schutzbauteil (28) umfasst, das an einem proximalen Ende des Hohlkörpers (20) in Bezug auf das Gewindeende (14) der Schraube (12) angeordnet ist und die Schnittstelle zwischen der Klappe (200) und dem Körper (20) schützen soll.

10. Vorrichtung nach dem vorhergehenden Anspruch, wobei das Schutzbauteil aus einem weicheren Material als der Hohlkörper (20) besteht, wie etwa PTFE (Polytetrafluorethylen).

11. Hebewerkzeug (100) für ein Flugzeugelement, wie etwa eine Klappe (200) einer Schubumkehrvorrichtung einer Gondel, umfassend eine Vorrichtung (10) nach einem der vorhergehenden Ansprüche.

12. Werkzeug nach dem vorhergehenden Anspruch, umfassend ein Gestänge, das mindestens drei hohle rohrförmige Arme (102) enthält, wobei jeder Arm (102) ein erstes Ende und ein zweites Ende gegenüber dem ersten Ende umfasst, wobei die Arme (102) an ihrem ersten Ende miteinander verbunden sind und eine Vorrichtung (10) nach einem der Ansprüche 1 bis 10 im zweiten Ende jedes Arms (102) untergebracht ist.

## Claims

1. A device (10) for fastening a lifting tooling (100) on an aircraft element such as a nacelle thrust reverser door (200), the device including:
- a threaded screw (12) having a longitudinal axis (z) and including a distal end (16) having a screw head, a threaded proximal end (14) and an intermediate part (18),
- a hollow body (20) in which the threaded screw is housed while allowing the rotation of the threaded screw along its longitudinal axis,
- an orientation and positioning system (22) of the threaded screw allowing the rotation of the screw about axes (x, y) transverse to the longitudinal axis of the threaded screw, and the translation of the screw parallel to its longitudinal axis, the device being **characterized by**
- a retraction system (24, 26) of the threaded end of the screw in the body.

2. The device according to claim 1, wherein the retraction system (24, 26) includes a spring (24) and a spacer (26), the spring (24) being disposed between the hollow body (20) and the screw head (16), the spring bearing by its proximal end (24a) on the hollow body (20) and by its distal end (24b) on the screw head (16) via the spacer (26), the spacer having a shape allowing the connection between the screw head (16) and the orientation and positioning system (22) of the screw, when the screw (12) is projecting in an orifice of the door (200).

3. The device according to any one of the preceding claims, wherein the orientation and positioning system (22) of the threaded screw includes:
- a tubular element (30) including a proximal end (30a) with an oblong transverse bore (32) in which the threaded screw (12) is inserted and a distal end (30b) intended to be fastened to the lifting tooling (100), and
- a ball joint system disposed in contact with the hollow body (20) and the outer walls (32', 32") of the oblong transverse bore (32) of the tubular element (30).

4. The device according to the preceding claim, wherein the outer diameter (d) of the hollow body (20) is less than the diameter (D, D') of the oblong transverse bore (32), so that a clearance (34) is present between the inner wall of the oblong transverse bore (32) and the hollow body (20) inserted in the oblong transverse bore.

5. The device according to any one of claims 3 to 4, wherein the ball joint system comprises at least a pair of convex (22a, 22'a) and concave (22b, 22'b) washers.

6. The device according to the preceding claim, wherein the ball joint system is disposed in contact with the outer walls (32', 32") of the oblong transverse bore (32) of the tubular element (30) and of the hollow body (20), so that the screw (12) can pivot on itself and about any axis transverse to its longitudinal axis (z).

7. The device according to any one of claims 3 to 6, wherein the ball joint system comprises a proximal pair of convex (22a) and concave (22b) washers, and a distal pair of convex (22'a) and concave (22'b) washers, each pair being disposed in contact with the outer walls (32', 32") of the oblong transverse bore (32) of the tubular element (30) and the hollow body (20), on each side of the oblong transverse bore (32) of the tubular element.

8. The device according to any one of the preceding claims, wherein the hollow body (20) is made of a metallic material such as iron or aluminum alloys, stainless steel or cast iron.

9. The device according to any one of the preceding claims, including a hollow protection part (28), disposed at the proximal end of said body (20) relative to the threaded end (14) of the screw (12), and intended to protect the interface between the door (200) and said body (20).

10. The device according to the preceding claim, wherein the protection part is made of a material softer than the hollow body (20), such as PTFE (Polytetrafluoroethylene).

11. A lifting tooling (100) for an aircraft element, such as a nacelle thrust reverser door (200), including a device (10) according to any one of the preceding claims.

12. The tooling according to the preceding claim, including a frame comprising at least three hollow tubular branches (102), each branch (102) comprising a first end and a second end opposite the first end, the branches (102) being interconnected by their first end, and a device (10) according to any one of claims 1 to 10 being housed in the second end of each branch (102).
